# EUROPÄISCHE PATENTSCHRIFT

(11) **EP 1 781 503 B1**
(45) Veröffentlichungstag und Bekanntmachung des Hinweises auf die Patenterteilung: **26.09.2012**
(21) Anmeldenummer: 05774031.8
(22) Anmeldetag: 17.08.2005
(51) Int. Cl.: B60R 21/01, B60R 21/013, B60R 22/46

(54) **RÜCKHALTESYSTEM FÜR EIN KRAFTFAHRZEUG UND VERFAHREN ZU DESSEN BETRIEB**
RESTRAINT SYSTEM FOR A MOTOR VEHICLE AND METHOD FOR OPERATING THE SAME
SYSTEME DE MAINTIEN POUR VEHICULE ET PROCEDE D'OPERATION D'UN TEL SYSTEME

(30) Priorität: 27.08.2004 DE 102004041425
(43) Veröffentlichungstag der Anmeldung: 09.05.2007
(73) Patentinhaber: Bayerische Motoren Werke Aktiengesellschaft, 80809 München (DE)
(72) Erfinder: BAUR, Richard, 85276 Pfaffenhofen (DE); URBAHN, Jan, Ramsey, NJ 07446 (US)
(86) Internationale Anmeldenummer: PCT/EP2005/008926
(87) Internationale Veröffentlichungsnummer: WO 2006/024400

(56) Entgegenhaltungen:
- DE-A1- 4 447 174
- DE-A1- 10 153 052
- DE-A1- 19 813 921
- DE-A1- 19 822 263
- US-A- 5 326 146

## Beschreibung

Die Erfindung bezieht sich auf ein Rückhaltesystem für ein Kraftfahrzeug nach dem Oberbegriff des Patentanspruchs 1 und ein Verfahren zum Betreiben eines solchen Rückhaltesystems

Ein derartiges Rückhaltesystem ist bereits aus der US 5,326,146 bekannt.

Bei diesem Rückhaltesystem werden in einem Steuergerät die Daten von im Fahrzeug vorhandenen Sensoren im Hinblick auf eine mögliche Kollision des Fahrzeugs ausgewertet. Wird eine Kollision erkannt, aktiviert das Steuergerät eine erste Rückhalteeinrichtung und nach einem vorgegebenen Zeitintervall eine zweite Rückhalteeinrichtung. Zusätzlich wird mittels einer Funktionsstörungsüberwachungseinheit das Aktivieren beziehungsweise Auslösen der ersten Rückhalteeinrichtung überwacht. Wird eine Funktionsstörung beim Auslösen der ersten Rückhalteeinrichtung erkannt, aktiviert das Steuergerät unverzüglich, also ohne Zeitverzögerung, die zweite Rückhalteeinrichtung. Bei diesem Rückhaltesystem wird lediglich eine Funktionsstörung der ersten Rückhalteeinrichtung berücksichtigt.

Weiter ist aus der DE 101 23 921 C1 ein Rückhaltesystem mit einer Gurtkraftbegrenzungsvorrichtung bekannt, wobei das Rückhaltekraftniveau in Abhängigkeit von einer im Vorfeld ermittelten Gefährdungsstufe des Fahrzeuginsassen. Zum weiteren technischen Verständnis wird auf die DE 198 22 263 A1 und die DE 101 53 052 A1 verwiesen.

Aufgabe der Erfindung ist, ein verbessertes Rückhaltesystem anzugeben, welches eine Funktionsstörung beim Auslösen der zweiten Rückhalteeinrichtung berücksichtigt.

Diese Aufgabe wird erfindungsgemäß durch ein Rückhaltesystem nach Patentanspruch 1 und ein Verfahren nach Anspruch 5 gelöst. Vorteilhafte Weiterbildungen sind die Gegenstände der abhängigen Ansprüche.

Das erfindungsgemäße Rückhaltesystem für ein Kraftfahrzeug mit Sensoren zum Detektieren einer Kollision des Kraftfahrzeugs, und mit einem Steuergerät, das die Sensorsignale auswertet und bei einer erkannten Kollision des Kraftfahrzeugs ein erstes Signal an eine Sicherheitsgurtrückhalteeinrichtung als erste Rückhalteeinrichtung sendet, welche daraufhin einen Gurtstrammer mit einer vorgegebenen ersten Rückhaltekraft aktiviert, und ein zweites Signal an ein Frontairbagsystem als zweite Rückhalteeinrichtung sendet, welches darauf hin einen Frontairbag nach einem vorgegebenen Zeitintervall nach dem Aktivieren des Gurtstrammers zündet, und mit einer Funktionsstörungsüberwachungseinheit für eine der Rückhalteeinrichtungen zeichnet sich dadurch aus, dass das Steuergerät bei Erkennen einer Funktionsstörung des Frontairbagsystems durch die Funktionsstörungsüberwachungseinheit ein drittes Signal an eine Ersatzrückhalteeinrichtung sendet, die daraufhin einen Ersatzaktuator aktiviert.

Der Vorteil dieses Rückhaltesystems liegt darin, dass bei einer Funktionsstörung des Frontairbagsystems der Fahrzeuginsasse oder die Fahrzeuginsassen bei einem Unfall trotzdem gut geschützt werden. Wie bei bereits bekannten Rückhaltesystemen werden Signale verschiedener im Fahrzeug vorhandener Sensoren im Hinblick auf einen Unfall beziehungsweise auf eine Kollision ausgewertet. Bei den Sensoren kann es sich beispielsweise um Beschleunigungssensoren oder Drucksensoren handeln, die in Vertikalrichtung des Fahrzeugs verbaut sind. Das Rückhaltesystem ist derart ausgestaltet, dass bei Erkennen einer Kollision des Fahrzeugs das Steuergerät zuerst ein erstes Signal an eine Sicherheitsgurtrückhalteeinrichtung und anschließend ein zweites Signal an das Frontairbagsystem sendet. Die Sicherheitsgurtrückhalteeinrichtung aktiviert auf das erste Signal des Steuergeräts hin einen Aktuator zum Strammen des Gurts, also einen Gurtstrammer, mit einer vorgegebenen ersten Rückhaltekraft. Dadurch soll verhindert werden, dass der Fahrer ungebremst, also mit zu großer Energie auf den durch das zweite Signal des Steuergeräts ausgelösten Frontairbag auftrifft. Die Rückhaltekraft sollte aber auch nicht zu groß sein, damit sich der Fahrzeuginsasse nicht unnötige Verletzungen, zum Beispiel Rippenbrücke, zuzieht. Anschließend wird der Frontairbag erfindungsgemäß mit einer zeitlichen Verzögerung zum Gurtstrammer ausgelöst, wobei die zeitliche Abstimmung zum Aktivieren der Aktuatoren der Rückhalteeinrichtungen von besondere Bedeutung ist, um den Insassen einen optimalen Schutz zu bieten. Die Zeitverzögerung ist in der Regel nur sehr gering. Es ist unerheblich, ob das Steuergerät das zweite Signal verzögert an das Frontairbagsystem abgibt oder ob die Zeitverzögerung durch das Frontairbagsystem selbst vorgenommen wird.

Das Rückhaltesystem kann auch derart ausgestaltet sein, dass das Steuergerät in Abhängigkeit von der Stärke der Kollision des Kraftfahrzeugs entweder nur die erste Rückhalteeinrichtung oder, z. B. bei einer stärkeren Kollision, die erste und zweite Rückhalteeinrichtung auslöst. Bei der erfindungsgemäßen Rückhaltesystem wird davon ausgegangen, dass sowohl die erste, also auch die zweite Rückhalteeinrichtung aktiviert beziehungsweise ausgelöst werden sollten.

Wird nun der Frontairbag trotz eines vom Steuergeräts gesendeten zweiten Signals nicht ausgelöst und dadurch durch die Funktionsstörungsüberwachungseinheit eine Funktionsstörung des Frontairbagsystems erkannt, sendet das Steuergerät ein drittes Signal an eine Ersatzrückhalteeinrichtung, die daraufhin einen Ersatzaktuator aktiviert. Dadurch wird der Insassenschutz weiter verbessert.

Die Ersatzrückhalteeinrichtung ist die Sicherheitsgurtrückhalteeinrichtung, an die das Steuergerät das dritte Signal sendet. Durch das dritte Signal aktiviert die Sicherheitsgurtrückhalteeinrichtung den Gurtstrammer nicht mit der vorgegebenen ersten Rückhaltekraft, sondern mit einer zur ersten Rückhaltekraft unterschiedlichen vorgegebenen zweiten Rückhaltekraft.

Vorteilhafterweise ist die zweite Rückhaltekraft größer als die erste Rückhaltekraft. Dadurch wird verhindert dass der Insasse bei einer Kollision und einer Funktionsstörung des Frontairbagsystems auf das Lenkrad beziehungsweise auf das Armaturenbrett aufschlägt, was zu schwerwiegenden Verletzungen des Insassen führen könnte. Die Sicherheitsgurtrückhalteeinrichtung übernimmt somit die gesamte Rückhaltebeziehungsweise Schutzfunktion.

Vorteilhafterweise ist die Funktionsstörungsüberwachungseinheit als Airbag-Zündkreisüberwachungseinheit oder als Innenraum-Schalldruckausbreitungsüberwachungseinrichtung mittels Mikrofon ausgestaltet. Die Ausgestaltung der Funktionsstörungsüberwachungseinheit als Airbag-Zündkreisüberwachungseinheit, bietet den Vorteil, dass dadurch mit einer sehr hohen Wahrscheinlichkeit eine Funktionsstörung erkannt wird. Bei der Ausgestaltung als Schalldruckausbreitungsüberwachungseinrichtung kann ein bereits im Fahrzeug vorhandenes Mikrofon, beispielsweise das Mikrofon der Telefonanlage verwendet werden, wodurch keine zusätzlichen Kosten entstehen würden.

Auf das Verfahren zum Betreiben des erfindungsgemäßen Rückhaltesystems wird in der anschließenden Figurenbeschreibung eingegangen.

Im Folgenden wird die Erfindung anhand einer Zeichnung näher erläutert. Dabei zeigt
- Fig. 1: ein erfindungsgemäßes Rückhaltesystem und deren Funktionsweise ohne Funktionsstörung des Frontairbagsystems und
- Fig. 2: ein erfindungsgemäßes Rückhaltesystem und deren Funktionsweise bei einer Funktionsstörung des Frontairbagsystems und
- Fig. 3: ein Ablaufdiagramm des Verfahrens zum Betreiben des erfindungsgemäßen Rückhaltesystems.

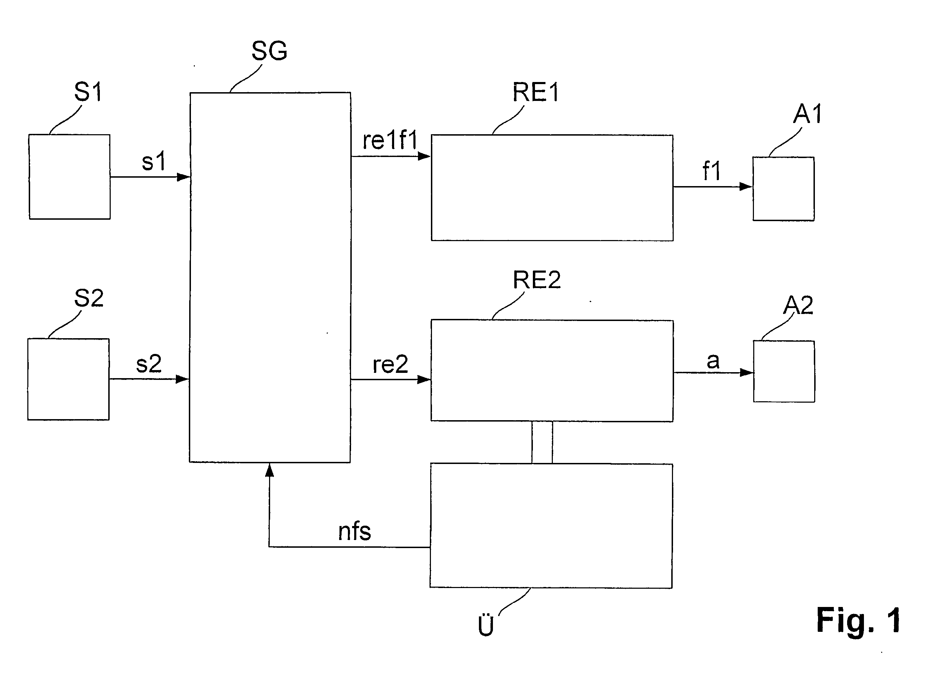

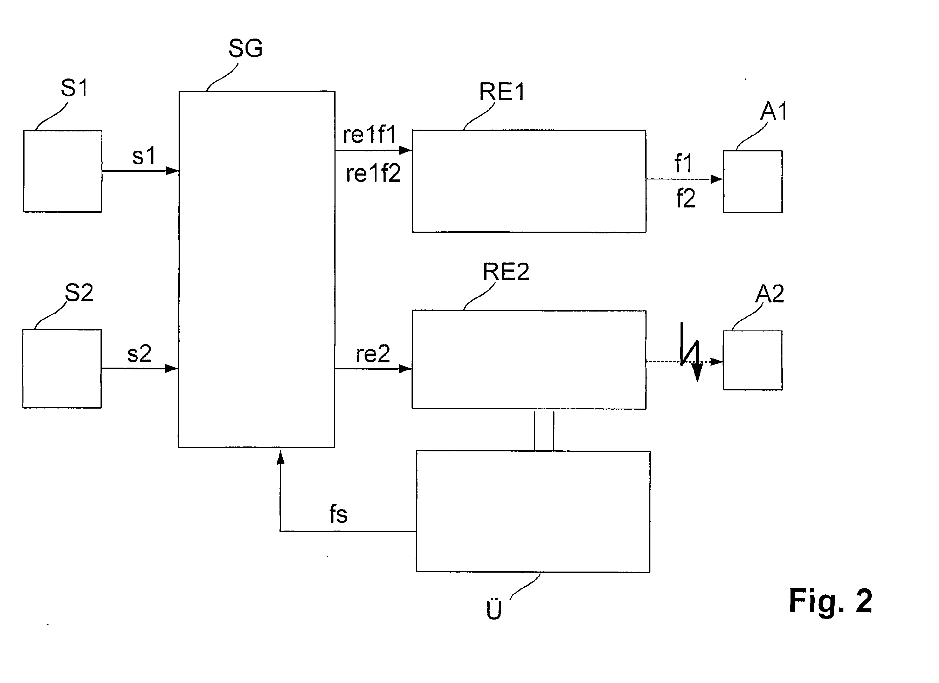

Das in der Fig. 1 und Fig. 2 dargestellte erfindungsgemäße Rückhaltesystem eines Kraftfahrzeugs umfasst Sensoren S1 und S2 zum Detektieren einer Kollision des Kraftfahrzeugs, welche Signale s1 und s2 an ein Steuergerät SG senden. Das Steuergerät SG wertet die Signale s1 und s2 der Sensoren S1 und S2 im Hinblick auf eine Kollision des Kraftfahrzeugs aus. Erkennt das Steuergerät SG aus den Sensorsignalen s1 und s2 eine Kollision des Kraftfahrzeugs, sendet es ein erstes Signal re1f1 an eine Sicherheitsgurtrückhalteeinrichtung RE1 als erste Rückhalteeinrichtung. Die Sicherheitsgurtrückhalteeinrichtung RE1 aktiviert auf das erste Signal re1f1 des Steuergeräts SG hin einen Gurtstrammer A1 zum Strammen des Gurts mit einer vorgegebenen ersten Rückhaltekraft f1. Zusätzlich sendet das Steuergerät SG bei einer erkannten Kollision ein zum ersten Signal re1f1 zeitlich verzögertes zweites Signal re2 an ein Frontairbagsystem RE2 als zweite Rückhalteeinrichtung. Das Frontairbagsystem RE2 zündet mittels des Signals a auf das zweite Signal re2 des Steuergeräts SG hin einen Frontairbag A2. Weiter umfasst das erfindungsgemäße Rückhaltesystem eine Funktionsstörungsüberwachungseinheit Ü, welche mit dem Frontairbagsystem RE2 verbunden ist und dessen Funktionsweise überwacht. Die Funktionsstörungsüberwachungseinheit Ü ist vorteilhafterweise als Airbag-Zündkreisüberwachungseinheit oder als Innenraum-Schalldrucküberwachungseinheit ausgebildet.

In der Fig. 1 wird davon ausgegangen, dass beim Auslösen des Frontairbags A2 auf das zweite Signal re2 des Steuergeräts SG keine Funktionsstörung vorliegt. Die Funktionsstörungsüberwachungseinheit Ü übermittelt dem Steuergerät SG die einwandfreie Funktion des Frontairbagsystems RE2 mittels eines Signals nfs. Anstelle der Übermittlung des Signals nfs kann die Funktionsstörungsüberwachungseinheit Ü bei einwandfreier Funktion des Frontairbagsystems RE2 auch kein Signal übermitteln, wodurch das Steuergerät SG weiß, dass keine Funktionsstörung vorliegt.

Im Unterschied zur Fig.1 wird in der Fig. 2 davon ausgegangen, dass eine Funktionsstörung beim Auslösen des Frontairbags A2 durch das Frontairbagsystem RE2 vorliegt. Ist die Funktionsstörungsüberwachungseinheit Ü als Airbag-Zündkreisüberwachungseinheit ausgebildet, würde die Funktionsstörungsüberwachung durch eine Überwachung eines Widerstandswertes im Zündkreis vorgenommen werden. Sobald der Frontairbag gezündet ist, geht der Widerstand im Zündkreis gegen unendlich.

Ist die Funktionsstörungsüberwachungseinheit Ü als Innenraum-Schalldrucküberwachungseinheit ausgebildet, kann eine störungsfreie Funktionsweise des Frontairbagsystems RE2 dadurch erkannt werden, dass es unmittelbar nach dem Auslösen des Frontairbags A2 zu einem kurzzeitig erhöhten Schalldruck im Fahrzeuginnenraum kommt. Wird kein kurzeitig erhöhter Schalldruck detektiert, liegt eine Funktionsstörung des Frontairbagsystems RE2 vor.

Wird nun durch die Funktionsstörungsüberwachungseinheit Ü festgestellt, dass der Frontairbag A2 auf das zweite Signal re2 des Steuergeräts SG nicht gezündet wurde, sendet die Funktionsstörungsüberwachungseinheit Ü sofort ein Signal fs an das Steuergerät SG. Das Steuergerät SG erkennt darauf hin die Funktionsstörung des Frontairbagsystems RE2 und sendet unmittelbar auf das Signal fs der Funktionsstörungsüberwachungseinheit Ü ein drittes Signal re1f2 an eine Ersatzrückhalteeinrichtung RE1, die darauf hin einen Ersatzaktuator A1 aktiviert.

Hierbei handelt es sich bei der Ersatzrückhalteeinrichtung RE1 um die bereits im Fahrzeug vorhandene Sicherheitsgurtrückhalteeinrichtung RE1, die auf das dritte Signal re1f2 des Steuergeräts SG hin den Gurtstrammer A1 als Ersatzaktuator mit einer vorgegebenen zweiten Rückhaltekraft f2 aktiviert.

Vorteilhafterweise ist die zweite Rückhaltekraft f2 größer als die erste Rückhaltekraft f1. Dies bedeutet, dass der Gurtstrammer A1 bei einer Kollision des Kraftfahrzeugs zuerst mit einer geringen ersten Rückhaltekraft f1 ausgelöst wird. Liegt eine Funktionsstörung des Frontairbagsystems RE2 vor, wird erfindungsgemäß der Gurtstrammerer A1 anschließend mit einer zweiten, zur ersten Rückhaltekraft f1 erhöhte Rückhaltekraft f2 aktiviert, da die Sicherheitsgurtrückhalteeinrichtung RE1 die einzige funktionsfähige Rückhalteeinrichtung ist.

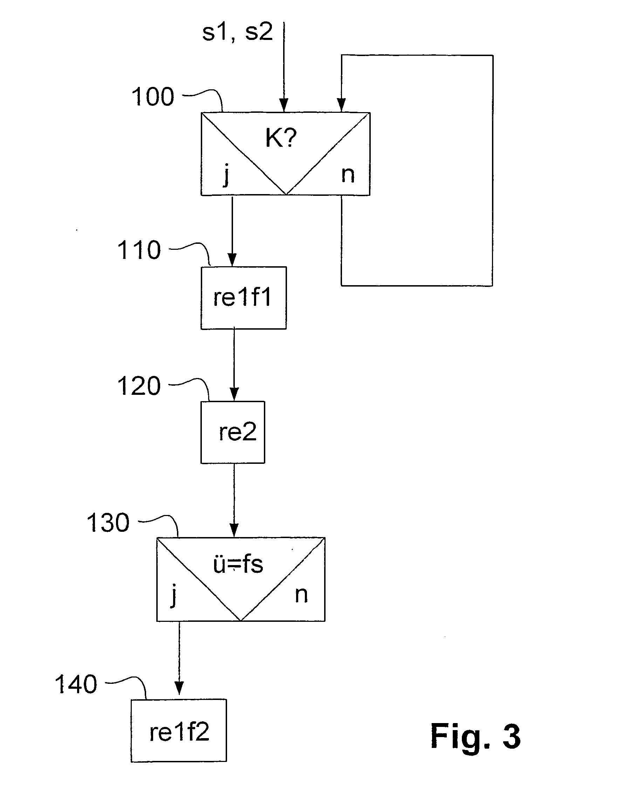

In der Fig. 3 ist ein vereinfachtes Ablaufdiagramm des Verfahrens zum Betreiben des erfindungsgemäßen Rückhaltesystems dargestellt. In einem ersten Schritt 100 werden die Signale s1 und s2 der Sensoren S1 und S2 im Hinblick auf eine Kollision des Kraftfahrzeugs ausgewertet. Solange im Schritt 100 keine Kollision erkannt wird, also K = n ist, werden die Signale s1 und s2 erneut überprüft. Wird eine Kollision erkannt, ist also K = j, wird in einem Schritt 110 ein erstes Signal re1f1 erzeugt, das an eine hier nicht dargestellte Sicherheitsgurtrückhalteeinrichtung übertragen wird, die darauf hin einen Gurtstrammer mit einer vorgegebenen ersten Rückhaltekraft entsprechend der Fig. 1 beziehungsweise Fig. 2 aktiviert.

Weiter wird in einem Schritt 120 ein zum ersten Signal re1f1 verzögertes zweites Signal re2 erzeugt, das an ein hier nicht dargestelltes Frontairbagsystem übertragen wird, das darauf hin einen Frontairbag entsprechend der Fig. 1 zünden sollte.

In einem nächsten Schritt 130 wird mittels einer hier nicht dargestellten Funktionsstörungsüberwachungseinheit durch die Abfrage von fs überprüft, ob das Frontairbagsystem den Frontairbag gezündet hat beziehungsweise ob der Frontairbag einwandfrei ausgelöst hat. Liegt keine Funktionsstörung des Frontairbagsystems vor, ist also fs = n, hat das Rückhaltesystem einwandfrei ausgelöst. Liegt jedoch eine Funktionsstörung des Frontairbagsystems vor, ist also fs = j, wird in einem Schritt 140 ein drittes Signal re1f2 erzeugt, das an die hier nicht dargestellte Sicherheitsgurtrückhalteeinrichtung übertragen wird. Diese aktiviert darauf hin den Gurtstrammer mit einer vorgegebenen zweiten Rückhaltekraft entsprechend der Fig. 2.

## Patentansprüche

1. Rückhaltesystem für ein Kraftfahrzeug mit Sensoren (S1, S2) zum Detektieren einer Kollision des Kraftfahrzeugs, und mit einem Steuergerät (SG), das die Sensorsignale (s1,s2) auswertet und bei einer erkannten Kollision des Kraftfahrzeugs ein erstes Signal (re1f1) an eine Sicherheitsgurtrückhalteeinrichtung (RE1) als erste Rückhalteeinrichtung sendet, welche daraufhin einen Gurtstrammer (A1) mit einer vorgegebenen ersten Rückhaltekraft (f1) aktiviert, und anschließend ein zweites Signal (re2) an ein Frontairbagsystem (RE2) als zweite Rückhalteeinrichtung sendet, welches darauf hin einen Frontairbag (A2) zündet, und mit einer Funktionsstörungsüberwachungseinheit (Ü) für eine der Rückhalteeinrichtungen (RE2), wobei das Steuergerät (SG) bei Erkennen einer Funktionsstörung (K=j) der einen Rückhalteeinrichtung (RE2) durch die Funktionsstörungsüberwachungseinheit (Ü) ein drittes Signal (re1f2) an eine Ersatzrückhalteeinrichtung (RE1) sendet, die daraufhin einen Ersatzaktuator (A1) aktiviert, **dadurch gekennzeichnet, dass** die Ersatzrückhalteeinrichtung die Sicherheitsgurtrückhalteeinrichtung (RE1) ist, welche auf das dritte Signal (re1f2) des Steuergeräts (SG) bei Erkennen einer Funktionsstörung (K=j) des Frontairbagsystems (REZ) den Gurtstrammer (A1) als Ersatzaktuator mit einer vorgegebenen zweiten Rückhaltekraft (f2) aktiviert.

2. Rückhaltesystem nach Patentanspruch 1, **dadurch gekennzeichnet, dass** die zweite Rückhaltekraft (f2) größer ist als die erste Rückhaltekraft (f1).

3. Rückhaltesystem nach einem der vorangegangenen Patentansprüche, **dadurch gekennzeichnet, dass** die Funktionsstörungsüberwachungseinheit (Ü) eine Airbag-Zündkreisüberwachungseinheit ist.

4. Rückhaltesystem nach einem der Patentansprüche 1 bis 3, **dadurch gekennzeichnet, dass** die Funktionsstörungsüberwachungseinheit (Ü) eine Innenraum-Schalldruckausbreitungsüberwachungseinrichtung ist.

5. Verfahren zum Betreiben eines Rückhaltesystems nach einem der vorangegangenen Patentansprüche.

## Claims

1. A restraint system for a motor vehicle comprising sensors (S1, S2) for detecting a collision of the motor vehicle, and comprising a control apparatus (SG), which evaluates the sensor signals (s1, s2) and, when a collision of the motor vehicle is detected, sends a first signal (re1f1) to a safety belt restraint device (RE1) as the first restraint device, which thereupon activates a belt tensioner (A1) at a predetermined first restraining force (f1), and then sends a second signal (re2) to a front airbag system (RE2) as the second restraint device, which thereupon triggers a front airbag (A2), and comprising a malfunction monitoring unit (Ü) for one of the restraint devices (RE2), wherein the control apparatus (SG), on detecting a malfunction (K=j) of one restrain device (RE2) by means of the malfunction monitoring unit (Ü), sends a third signal (re1f2) to a replacement restraint device (RE1), which thereupon activates a replacement actuator (A1), **characterised in that** the replacement restraint device is the safety belt restraint device (RE1), which, upon the third signal (re1f2) of the control apparatus (SG), on detecting a malfunction (K=j) of the front airbag system (RE2), activates the belt tensioner (A1) as the replacement actuator at a predetermined second restraining force (f2).

2. A restraint system according to claim 1, **characterised in that** the second restraining force (f2) is greater than the first restraining force (f1).

3. A restraint system according to any one of the preceding claims, **characterised in that** the malfunction monitoring unit (Ü) is an airbag ignition circuit monitoring unit.

4. A restraint system according to any one of claims 1 to 3, **characterised in that** the malfunction monitoring unit (Ü) is an interior sound pressure propagation monitoring device.

5. A method for operating a restraint system according to any one of the preceding claims.

## Revendications

1. Système de maintien ou de retenue de véhicule automobile comportant des capteurs (S 1, S2) détectant une collision du véhicule, et
- un appareil de commande (SG) exploitant les signaux de capteur (s1, s2) et en cas de collision détectée du véhicule, il émet un premier signal (re1f1) vers l'installation de maintien à ceinture de sécurité (RE1) comme première installation de maintien qui ensuite active un raidisseur de ceinture (A1) avec une première force de retenue (f1), prédéterminée et ensuite un second signal (re2) envoyé à un système frontal de coussin gonflable (RE2) comme seconde installation de retenue qui ensuite déclenche un coussin gonflable frontal (A2), et
- une installation de surveillance d'incident de fonctionnement (Ü) pour l'une des installations de maintien (RE2),
- l'appareil de commande (SG) détectant un incident de fonctionnement (K=j) d'une installation de maintien (RE2), émet par l'installation de surveillance d'incident de fonctionnement (Ü), un troisième signal (re1f2) à une installation de maintien de remplacement (RE1) qui, par conséquence, active un actionneur de remplacement (A1),
système de maintien **caractérisé en ce que**
l'installation de maintien de remplacement est l'installation de maintien à ceinture de sécurité (RE1) qui active en réponse au troisième signal (re1f2) de l'appareil de commande (SG), en cas de détection d'un incident de fonctionnement (K=j) du système frontal de coussin gonflable (RE2), le raidisseur de ceinture (A1) comme actionneur de remplacement avec une seconde force de retenue (f2), prédéfinie.

2. Système de maintien selon la revendication 1,
**caractérisé en ce que**
la seconde force de maintien (f2) est supérieure à la première force de maintien (f1).

3. Système de maintien selon l'une des revendications précédentes,
**caractérisé en ce que**
l'unité de surveillance d'incident de fonctionnement (Ü) est une unité de surveillance de déclenchement de coussin gonflable.

4. Système de maintien selon l'une des revendications 1 à 3,
**caractérisé en ce que**
l'unité de surveillance d'incident de fonctionnement (Ü) est une installation de surveillance du développement de la pression phonique dans l'habitacle.

5. Procédé de gestion d'un système de maintien selon l'une des revendications précédentes.
